# EUROPEAN PATENT APPLICATION

(11) **EP 2 879 316 A1**
(43) Date of publication of application: **03.06.2015**
(21) Application number: 13195261.6
(22) Date of filing: 02.12.2013
(51) Int. Cl.: H04B 10/50, H04B 10/532, H04B 10/556, H04B 10/61

(54) **Optical communication system with a polarization diversity optical device**

(71) Applicant: Rigas Tehniska universitate, Riga 1658 (LV)
(72) Inventor: Ivanovs, Girts, 1009 Riga (LV); Bobrovs, Vjaceslavs, 3416 Liepaja (LV); Porins, Jurgis, 1011 Riga (LV); Gavars, Peteris, 1067 Riga (LV); Lauks, Gunars, 1057 Riga (LV); Parts, Rolands, 1026 Riga (LV); Ozols, Andris, 1013 Riga (LV)
(74) Representative: Fortuna, Jevgenijs

(57) **Abstract**

The present invention generally relates to communication system comprising optically connected: at least one optical transmitter, at least two arrayed waveguide gratings (AWG) for multiple channel operation, at least one optical transmission span and at least one optical receiver, wherein optical transmitter comprises data sources being electrically connected to two precoders; the two precoders then are electrically connected to four electrical amplifiers, which are electrically connected to two quadrature phase-shift-keying modulators; light source being optically connected to polarization diversity optical device, then two quadrature phase-shift-keying modulators inputs and outputs are optically connected to polarization diversity optical devices for optical signal splitting and combining by orthogonal states of polarization, then output of the polarization diversity device is optically connected to input of AWG; wherein optical transmission span comprising optical amplifiers are optically connected to standard single mode fibre (SSMF) and then connected to AWG; wherein optical receiver comprising local oscillator light source being optically connected to polarization diversity optical devices, then two polarization diversity optical devices are optically connected to two 90 degree optical hybrids, which are optically connected to PIN photodiodes, then PIN photodiodes are electrically connected to electrical amplifiers, which are electrically connected to logic circuits and then electrically connected to digital signal processing block which output is electrically connected to receiving data interface.

## Description

### Technical Field

The present invention generally relates to fibre-optic communication networks. More particularly, the present invention relates to an optical communication system with a polarization diversity optical device for optical signal processing in systems transmitter and receiver.

### Background Art

Fibre-optic communication networks are experiencing an exponential growth in the bit rates of transmitted information, which is associated with development of broadband information transmission types. To address this growth advanced modulation formats, higher channel data rates and/or decreased channel spacing values are employed. This results in higher nonlinear impact from Kerr nonlinearities and nonlinear scatterings (Raman and Brillouin) induced by transmission media. The main impact is caused from cross-phase modulation (XPM) which is Kerr nonlinearity. Arises need for employing modulation formats which are more resistant to these effects.

Thanks to achievements in optical technology the single channel transmission speed has been increased in optical networks. The numbers of spectral efficiency and energy efficiency have been improved greatly after introducing advanced modulation formats and optical signal coherent detection. The development of dispersion compensator, optical amplifier and low loss optical fibre has leaded to high density wavelength division multiplexing systems with greater number of data channels by using all available bandwidth of single mode fibre. The usage of advanced modulation formats arise need for an optical device for optical signal processing in systems transmitter and receiver. For this problem many solutions have been provided until now.

T. Pfau et al in an article "Coherent Digital Polarization Diversity Receiver for Real-Time Polarization-Multiplexed QPSK Transmission at 2.8 Gbit/s" presents a coherent digital polarization diversity receiver for real-time reception of polarization-multiplexed synchronous quadrature phase-shift keying and transmission with distributed feedback lasers at a data rate of 2.8 Gbit/s. For optical signal processing in receiver and transmitter different elements are used. Also this system has technical limitations due to transmission speed of overall system. The numbers could be improved.

A. Beling et al in an article "Fully-Integrated Polarization-Diversity Coherent Receiver Module for 100G DP-QPSK" presents a new compact coherent receiver module comprising a micro-optic polarization beam splitter and two InP-based 90⁰ hybrids with integrated photodiodes is characterized at 112 Gbit/s polarization-multiplexing quadrature phase-shift-keying (DP-QPSK). This cost effective solution could be improved by increasing the transmission speed for each channel and thus the overall systems capacity.

There is known polarization diversity receiver for optical transmission system (patent US7209670). The drawback of the known system is that optical band pass filter used in the receiver is for a single optical channel processing. This results in limitation for a channel count increase. This could be improved by employing multichannel arrayed waveguide grating with Gaussian amplitude square transfer function. This could lead to smaller inserted chromatic dispersion from the optical filter.

There are known polarization diversity receiver systems and methods with polarization mode dispersion mitigation (patent US8306440). The drawback of the known system is that direct detection is employed in the receiver. This limits the usage of advanced modulation formats with superior transmission properties and employment of improved sensitivity receiver with balanced detection.

There is known polarization diversity optical system device, demodulator and transceiver (patent US2011/0249976). The drawback of the known device is that it could be used as splitter not also as a combiner. The number of elements used in the device could be decreased thus resulting in simpler and cost effective structure.

### Summary of the Invention

It is an object of the invention to propose an optical communication system with a polarization diversity optical device for optical signal processing in systems transmitter and receiver. The device could be used in the transmitter and the receiver which gives properties of splitter and combiner of optical signals by different state of polarization.

The proposed optical communication system comprising optically connected: at least one optical transmitter, at least two arrayed waveguide gratings (AWG) for multiple channel operation, at least one optical transmission span and at least one optical receiver, wherein optical transmitter comprises data sources being electrically connected to two precoders; the two precoders then are electrically connected to four electrical amplifiers, which are electrically connected to two quadrature phase-shift-keying modulators; light source being optically connected to polarization diversity optical device, then two quadrature phase-shift-keying modulators inputs and outputs are optically connected to polarization diversity optical devices for optical signal splitting and combining by orthogonal states of polarization, then output of the polarization diversity device is optically connected to input of AWG; wherein optical transmission span comprising optical amplifiers are optically connected to standard single mode fibre (SSMF) and then connected to AWG; wherein optical receiver comprising local oscillator light source being optically connected to polarization diversity optical devices, then two polarization diversity optical devices are optically connected to two 90 degree optical hybrids, which are optically connected to PIN photodiodes, then PIN photodiodes are electrically connected to electrical amplifiers, which are electrically connected to logic circuits and then electrically connected to digital signal processing block which output is electrically connected to receiving data interface.

### Brief Description of Drawings

Fig. 1 shows an optical communication system simplified block diagram illustrating the basic configuration of proposed system;
Fig. 2 shows a basic transmitter configuration;
Fig. 3 shows a basic receiver configuration;
Fig. 4 shows a configuration of a polarization diversity optical device for optical signal splitting by state of polarization;
Fig. 5 shows a configuration of a polarization diversity optical device for optical signal combining;
Fig. 6 shows a configuration of a polarization diversity optical device for optical signal splitting;

### Detailed Description of the Invention

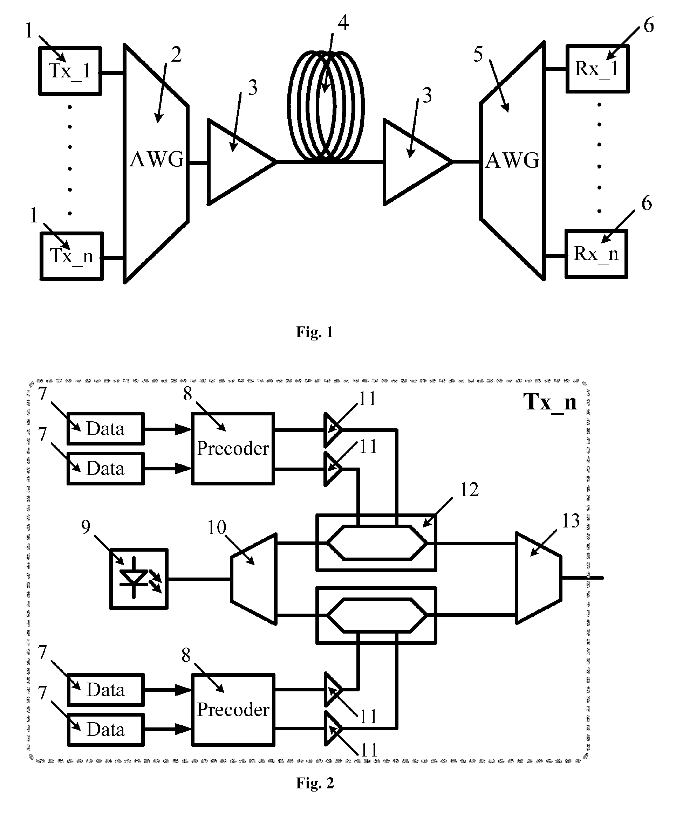

The simplified block diagram shown in Fig. 1 illustrates an optical communication system with a polarization diversity optical device for optical signal processing in systems transmitter and receiver according to the invention. Systems comprises optically connected: at least one optical transmitter 1, at least two AWG 2, 5 for multiple channel operation with Gaussian amplitude square transfer function and equal bandwidths, at least one optical transmission span consisting of optical amplifier 3 and standard single mode fibre 4 and at least one optical receiver 6.

Each transmitter 1 is connected to one port of AWG 2. The number of transmitters could be increased up to the number of the optical channels supported by AWG 2. The AWG 2 is used to combine optical signals from the transmitters in a single optical fibre and to filter unnecessary optical spectral components. Then AWG 2 is optically connected to an optical amplifier 3 which could be erbium doped fibre amplifier, Raman amplifier or parametric optical amplifier. In the case of parametric optical amplifier other all optical functionalities could be used in the proposed system like wavelength, modulation format conversion and all optical regeneration. Then optical amplifier 3 is optically connected to standard single mode fibre (SSMF) (G.652.d) 4. In this embodiment the optical fibre length is 80 km. The utilized fibre preferably has a large core effective area of 80 µm², attenuation α = 0.2 dB/km, nonlinear refractive coefficient nₖ = 2.5·10⁻²⁰ cm/W, and dispersion 16 ps/nm/km at the reference wavelength λ = 1550 nm. The used fibre is connected to AWG 5 with Gaussian amplitude square transfer function which is located at receiver side. AWG 5 is used for fibre and data channel splitting to the different receivers. Then AWG 5 at the receiver side is optically connected to at least one receiver 6.

The basic configuration of the transmitter 1 for an optical communication system with a polarization diversity optical device is shown on Fig.2. It contains four transmitting data interfaces 7, two electrical signal precoders 8, optical light source which is a continuous laser 9, two polarization diversity optical devices for optical signal processing 10, 13, four electrical amplifiers 11 and two quadrature phase-shift-keying modulators 12. The transmitting data interface 7 provides frequency up to 32 GHz. The precoders 8 are used to form a quadrature phase-shift-keying modulation format. The continuous laser 9 is an external cavity laser. The polarization diversity optical device for optical signal processing 10 is used to split optical signal in to two orthogonal states of polarization and polarization diversity optical device 13 is used to combine two optical signals with orthogonal states of polarization. Electrical amplifiers 11 are used to amplify the electrical signal to ensure appropriate electrical signal parameters for quadrature phase-shift-keying modulators 12.

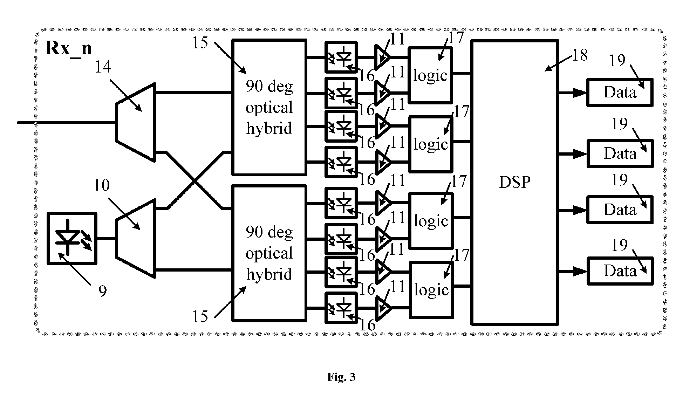

The basic configuration of the receiver 2 for an optical communication system with a polarization diversity optical device is shown in Fig. 3. It contains optical light source which is a continuous laser 9, two polarization diversity optical devices for optical signal processing 10, 14, eight electrical amplifiers 11, two 90 degree optical hybrids 15, eight PIN photodiodes 16, four logic circuits 17, digital signal processing block 18 and receiving data interfaces 19. Two polarization diversity optical devices for optical signal processing 10, 14 is used to split incoming optical signal in to two signal with orthogonal state of polarization and continuous laser 9 is used as a local oscillator to use for demodulation purposes. The 90 degree optical hybrid 15 mixes the incoming signal with the reference signal to generate four quadrature states in the complex-field space. The optical hybrid then delivers the four light signals to two pairs of balanced detectors which in this case consist of PIN photodiodes 16, electrical amplifiers 11 and logic circuit 17. The digital signal processing block 18 is used to recover the transmitted signal and to compensate the impact of chromatic dispersion and polarization mode dispersion.

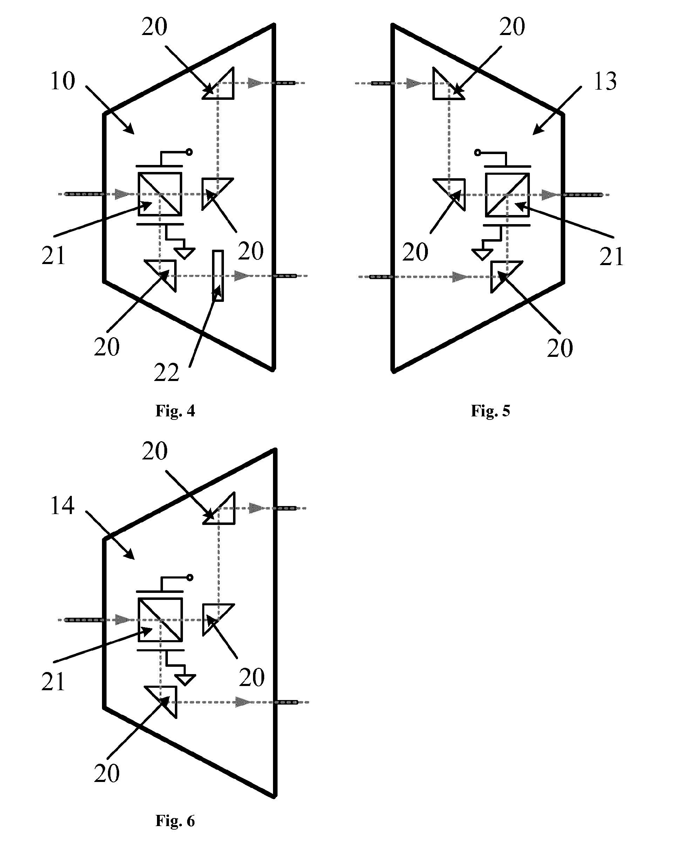

The basic configuration of the polarization diversity optical device 10 is shown on Fig.4. The device is used to split incoming optical signal in to two optical signals with two orthogonal states of polarization (normally in transverse electric (TE) and transverse magnetic (TM)). The polarization diversity optical device 10 contains optical prism 20, half wave plate 22 and holographic diffraction grating 21. The holographic diffraction grating 21 inscribed with following parameters: insertion loss ≤ 3 dB, inserted dispersion < 150 ps/nm and efficiency of signal splitting by orthogonal state of polarization higher than 75 %. This device could be employed as a combiner and splitter of optical signal by state of polarization. The other possible basic configurations of polarization diversity optical device 13 and 14 are shown in the Fig 5-6. The polarization diversity optical device 13 and 14 contains optical prisms 20 and holographic diffraction grating 21. The parameters of holographic diffraction grating could be altered by adding electric voltage for changing wavelength of operation.

The system shown in Fig 1-4 operates as follows. The data channels are generated in the transmitter(s) 1. The electrical signal is generated in the data source 7 from transmitting data interface. Each data interface generates electrical signal up to 32 Gbit/s. The electrical signal is sent to the precoder 8 to form an appropriate code for quadrature phase-shift keying generation. The coded electrical signal is sent to electrical amplifier 11 which is used to amplify the electrical signal to ensure appropriate electrical signal parameters for quadrature phase-shift-keying modulator 12. Electrical signal to the quadrature phase-shift-keying modulator 12 high frequency port is sent through coaxial cable. The light for data channels is generated in external cavity laser 9 which operates in continuous regime. The generated light has high output peak power and narrow spectral full width half maximum bandwidth. The light from continuous laser 9 is sent to optical input port of the polarization diversity optical device 10 for optical signal processing. The device 10 is used to split incoming optical signal in to two optical signals with two optical signals with orthogonal states of polarization. The light is sent to the optical input port of the two quadrature phase-shift-keying modulators 12. Each modulator modulates light with orthogonal states of polarization (normally TE and TM). Then modulated light from both quadrature phase-shift-keying modulators 12 are sent to the appropriate port of polarization diversity optical device 10 for optical signal combining by polarization state. The combined optical signal with polarization diversity has a 128 Gbit/s transmission speed. The transmission speed of the data channel could be changed with the need of additional functionality. For the forward error correction (FEC) implementation it could be increased up to 128 Gbit/s. This could be used to ensure that transmission distance could be improved if it is necessary.

The generated optical signal at the output of the transmitted 1 is sent to the input port of the AWG 2. This device has a with Gaussian amplitude square transfer function. This could lead to smaller inserted chromatic dispersion from the filter. The multiport device is used to ensure multiple channel operation. Then all generated optical signals from the output port of AWG 2 are combined in to the optical amplifier 3 which is used to compensate for the insertion loss from optical signal processing in the transmitter 1. The standard single mode fibre 4 is used as a transmission media. To compensate for the insertion loss in the transmission media an optical amplifier 3 is used. Then optical signal is sent to the input of the AWG 5 which ensures optical channel separation by appropriate wavelength band. Then filtered optical signal from the output port of the AWG 5 is sent to the optical receiver 6.

The incoming optical signal is sent to the input port of polarization diversity optical device 14 where it is divided in to two equal parts for processing in the 90 degree optical hybrid 15 which mixes the incoming signal with the reference signal to generate four quadrature states in the complex-field space. The reference signal is generated in continuous laser 9 and then divided in the polarization diversity optical device 10. The optical hybrid then delivers the four light signals to two pairs of balanced detectors which in this case consist of PIN photodiodes 16, electrical amplifiers 11 and logic circuit 17. The digital signal processing block 18 is used to recover the transmitted signal and to compensate the impact of chromatic dispersion and polarization mode dispersion. The processed electrical signal is sent to the receiving data interface 19.

## Claims

1. n optical communication system with a polarization diversity optical device comprising optically connected: at least one optical transmitter (1), at least two arrayed waveguide gratings (2, 5) for multiple channel operation, at least one optical transmission span and at least one optical receiver (6), wherein
- optical transmitter comprises data sources (7) being electrically connected to two precoders (8); the two precoders (8) then are electrically connected to four electrical amplifiers (11), which are electrically connected to two quadrature phase-shift-keying modulators (12); light source (9) being optically connected to polarization diversity optical device (10), then two quadrature phase-shift-keying modulators (12) inputs and outputs are optically connected to polarization diversity optical devices (10, 13) for optical signal splitting and combining by orthogonal states of polarization, then output of the polarization diversity device is optically connected to input of AWG (2);
- optical transmission span comprising optical amplifiers (3) are optically connected to standard single mode fibre (4) and then optically connected to AWG (5);
- optical receiver (6) comprising local oscillator light source (9) being optically connected to polarization diversity optical devices (10, 14), then two polarization diversity optical devices (10,14) are optically connected to two 90 degree optical hybrids (15), which are optically connected to PIN photodiodes (16), then PIN photodiodes (16) are electrically connected to electrical amplifiers (11), which are electrically connected to logic circuits (17) and then electrically connected to digital signal processing block (18) which output is electrically connected to receiving data interface (19).
